Europäisches Patentamt

European Patent Office

Office européen des brevets

(19)

(11) Veröffentlichungsnummer: **0 189 534**
**B1**

## (12) EUROPÄISCHE PATENTSCHRIFT

(45) Veröffentlichungstag der Patentschrifft:
**07.02.90**

(21) Anmeldenummer: **85114285.1**

(22) Anmeldetag: **09.11.85**

(51) Int. Cl. [5]: **B 01 D 53/34**

(54) **Verfahren zur Umsetzung von Gasen mit Suspensionen.**

(30) Priorität: **13.11.84 DE 3441442**

(43) Veröffentlichungstag der Anmeldung:
**06.08.86 Patentblatt 86/32**

(45) Bekanntmachung des Hinweises auf die Patenterteilung:
**07.02.90 Patentblatt 90/06**

(84) Bennante Vertragsstaaten:
**AT BE CH DE FR GB IT LI LU NL SE**

(56) Entgegenhaltungen:
**EP-A-0 161 520**
**DE-A-2 554 699**

**CHEMIE INGENIEUR TECHNIK, Band 55, Nr. 9, September 1983, Seiten 667-683, Nürnberg; W. KAMINSKY "Verfahren zur Entschwefelung von Rauchgas"**

(73) Patentinhaber: **KRC Umwelttechnik GmbH**
**Alfred-Nobel-Strasse 20**
**D-8700 Würzburg 1 (DE)**

(72) Erfinder: **Hüller, Rolf, Dr. Dipl.-Chem.**
**Holzgasse 7**
**D-8715 Iphofen (DE)**
Erfinder: **Gutmayer, Harald, Dr. Dipl.-Ing.**
**Den Haager Strasse 16**
**D-8700 Würzburg (DE)**

(74) Vertreter: **Werner, Hans-Karsten, Dr.**
**Deichmannhaus am Hauptbahnhof**
**D-5000 Köln 1 (DE)**

## Beschreibung

Gegenstand der vorliegenden Erfindung ist ein Verfahren zur Umsetzung von Gasen mit Suspensionen in Naß-Rauchgasentschwefelungsanlagen (Naß-REAs).

Die DE-A-254 699 beschreibt ein Verfahren zur Absorption von Schwefeldioxyd aus einem Gasstrom, bei dem der Gasstrom mit einer wäßrigen Lösung aus Ammonium-Monosulfit-Bisulfit gewaschen wird. Weiterhin wird eine Vorrichtung beschrieben, bei der in einer venturiartigen Vorrichtung die Gase beschleunigt und im innigen Kontakt mit dem Absorptionsmittel gebracht werden. Dabei wird die Geschwindigkeit des Gases ausgenutzt, um die Lösung des Absorptionsmittels zu zertrümmern und feine Tröpfchen zu bilden.

In Naß-Rauchgasentschwefelungsanlagen wird bisher ein relativ langsamer Gasstrom mit Suspensionen besprüht, wobei die Relativgeschwindigkeiten Gas/Suspension meist im Bereich zwischen 5 und 12, vorzugsweise bei ca. 8 m/sec liegen. Bei Naß-REAs mit einer Aufoxidation der Sulfite zu Sulfaten wird zusätzlich ein Luftstrom in die Suspension eingeblasen. Bei Naß-REAs nach dem Knauf-Research-Cottrell-Verfahren wird ein Luftstrom von unten durch den mehrere Meter hohen Suspensionssumpf hindurchgeblasen, wodurch das Calciumsulfit zum Calciumsulfat oxidiert wird. Hierbei entstehen Relativgeschwindigkeiten Gas/Suspension von 2 bis 3 m/sec. Diese Lufteinblasung muß kontinuierlich erfolgen, da anderenfalls die Suspension sedimentieren und die Löcher der Lufteinblasung verstopfen würden. Da die Lufteinblasung gegen eine mehrere Meter hohe Suspensionssäule stattfindet, ist hierfür ein Überdruck von ca. 0,8 bar notwendig. Diese Lufteinblasung verbraucht somit auch bei der Abschaltung des Kraftwerkes nicht unerhebliche Energiemengen.

Auch bei der Auswaschung des $SO_2$ aus den Rauchgasen mit Hilfe der Waschlösungen ist es notwendig, einen intensiven und großflächigen Kontakt zwischen den Gasen und den Suspensionen zu erzeugen. Dies geschieht bisher durch Versprühen der Suspensionen in den Gasraum und Rückführung der Suspension in einen Absorbertank.

Die Erfindung hat sich die Aufgabe gestellt, die Wirksamkeit von Naß-REAs zu verbessern und dabei energiesparend und umweltfreundlich zu arbeiten.

Es wurde überraschenderweise gefunden, daß es möglich ist, das Verfahren zur Umsetzung von Gasen mit Suspensionen in Naß-REAs dadurch wesentlich zu verbessern, daß die Gase in Zonen von Relativgeschwindigkeiten Gas/Suspension von mindestens 15 m/sec in Form von komprimierten Gasbläschen in die Suspension eingeleitet werden, und daß in den Zonen ein lokaler Druckanstieg erzeugt wird. Relativgeschwindigkeiten von 20 bis 30 m/sec haben sich als optimal erwiesen.

Bereits die hohen Relativgeschwindigkeiten Gas/Suspension von mindestens 15 m/sec bewirken eine raschere und intensivere Beladung der Suspension mit den Gasen. Durch Zonen mit einem lokalen Druckanstieg werden die Gase physikalisch in die Suspension gepreßt und dadurch schneller physikalisch gelöst. Die chemische Umsetzung von einzelnen Gasbestandteilen mit Bestandteilen der jeweiligen Suspension kann nämlich stets erst dann erfolgen, wenn die Gase physikalisch in der Suspension gelöst sind.

Die physikalische Lösung von Gasen in Suspensionen, insbesondere bewegten Suspensionen ist geringer als in reinen Lösungsmitteln. Bei den Suspensionen von Naß-REAs kommt erschwerend hinzu, daß insbesondere die in den Suspensionen gelösten Chloride die Löslichkeit der Gase erheblich herabsetzen. Wegen dieser verschlechterten physikalischen Löslichkeit von Gasen in Suspensionen von Naß-REAs war es bisher notwendig, den Chloridgehalt nicht über 30.000 ppm ansteigen zu lassen. Erfindungsgemäß ist es möglich, auch bei höherem Chloridgehalt ausreichende Mengen der Gase physikalisch in der Suspension zu lösen und danach zur chemischen Reaktion kommen zu lassen. Durch das erfindungsgemäße Verfahren wird daher nicht nur die Effizienz der Rauchgasentschwefelung erhöht, sondern auch die Umweltbelastung durch chloridhaltiges Abwasser vermindert.

Die Zonen hoher Relativgeschwindigkeiten Gas/Suspension können in besonders einfacher Weise erzeugt werden, durch Venturirohre, die als Flüssigkeitsstrahl-Saugpumpen arbeiten oder durch Begasungsrührwerke.

Bei der Verwendung von als Flüssigkeitsstrahl-Saugpumpen ausgebildeten Venturirohren wird entweder das Rauchgas oder die von außen zugeleitete Luft in den Flüssigkeitsstrahl eingesogen und intensiv mit ihm vermischt. Hierbei entstehen Relativgeschwindigkeiten von mehr als 15 m/sec. Weiterhin werden die Gasbläschen beim Durchgang durch das Venturirohr lokal stark komprimiert und dadurch praktisch in die Suspension physikalisch hineingepreßt. Bei Verwendung von Begasungsrührwerken entstehen ebenfalls Zonen hoher Relativgeschwindigkeiten und längere Zonen höher Drücke. Auch hierbei findet die physikalische Lösung der Gase durch rasche Verwirbelung der Gasbläschen und Abtransport durch eine etwas längere Zone erhöhten Drucks statt. Diese Ausführungsform kommt vorzugsweise zur Belüftung der Suspension im Sumpf des Absorberturmes in Frage. Die als Flüssigkeitsstrahlpumpen ausgebildeten Venturirohre hingegen können sowohl für die Begasung mit Luft wie auch die Umsetzung des Rauchgases mit der Waschsuspension verwendet werden.

Beide Ausführungsformen sind betriebsfreundlich, da sie ohne weiteres abgestellt und wieder angestellt werden können, ohne daß es hierdurch zu Störungen kommt. Bei der bisher durchgeführten Einblasung von Luft von unten in die Suspension kann es beim Abstellen der Einblasung zum Zusetzen der Luftöffnungen und Störungen der Begasung durch das Sediment der

EP 0 189 534 B1

3

Suspension kommen. Nach dem erfindungsgemäßen Verfahren wird die sauerstoffreiche Suspension stets von oben aufgegeben. Etwa gebildetes, Sediment kann mechanisch wieder aufgerührt werden, ohne zu sonstigen Störungen des Verfahrensablaufes zu führen.

Ein weiterer Vorteil des erfindungsgemäßen Verfahrens ist die bessere Ausnutzung des Sauerstoffs in der Luft. Während bisher mit einem stöchiometrischem Überschuß von 1 : 4 bis 1 : 6 gearbeitet werden mußte, genügt erfindungsgemäß ein stöchiometrischer Überschuß von ca. 1 : 2.

Bei dieser Entschwefelung des Rauchgases durch die Waschsuspension wird ebenfalls eine bessere und schnellere Absorption des $SO_2$ bewirkt, wodurch sich die Effizienz des Verfahrens erhöht. Die im ersten Verfahrensabschnitt notwendige Abkühlung der Rauchgase und Sättigung mit Wasserdampf erfolgt ebenfalls rascher und intensiver. Das Gesamtverfahren ist somit betriebsfreundlich, effizient, sparsam und umweltfreundlich.

In den nachfolgenden Beispielen ist eine typische Ausführungsform des erfindungsgemäßen Verfahrens näher erläutert.

**Beispiel 1**

In einer Naß-REA nach dem Knauf-Research-Cottrell-Verfahren wurden die Sprühdüsen für den unteren, sauerstoffhaltigen Kreislauf durch Flüssigkeitsstrahlpumpen ersetzt und mit einer Luftansaugleitung verbunden. Die noch vorhandene Luftzufuhr in den Sumpf wurde abgestellt. Die Suspension wurde mit ca. 1,5 bar Überdruck durch die erfindungsgemäß abgewandelten Sprühköpfe gepumpt. Bei einer Umpumpzeit von ca. 5 Min. saugte dabei 1 m³ Suspension stündlich 24 m³ Luft an. Dies war ca. die 5-fache Menge Luft die bisher von unten eingeblasen wurde. Es wurden daraufhin 70 % der Luftanschlüsse abgeschaltet, wonach die durch die restlichen 30 % angesaugte Luftmenge genügte, das Calciumsulfit vollständig in Calciumsulfat zu oxidieren.

**Beispiel 2**

In einem weiteren Versuch wurden auch die Sprühköpfe für den oberen Kreislauf der Waschlösung ersetzt durch flüssigkeitsstrahlpumpenförmig ausgebildete Venturirohre, welche Rauchgas ansaugten und mit der Waschlösung verwirbelten. Auch hier wurde mit einem Überdruck von ca. 1,5 bar versprüht. Die umgepumpte Suspensionsmenge konnte gegenüber der herkömmlichen bedeutend verkleinert werden ohne den Wirkungsgrad der $SO_2$-Absorption aus dem Rauchgas zu verschlechtern.

4

**Patentansprüche**

1. Verfahren zur Umsetzung von Gasen mit Suspensionen in Naß-Rauchgasentschwefelungsanlagen (Naß-REAs), dadurch gekennzeichnet, daß die Gase in Zonen von Relativgeschwindigkeiten Gas/Suspension von mindestens 15 m/sec in Form von komprimierten Gasbläschen in die Suspension eingeleitet werden, und daß in den Zonen ein lokaler Druckanstieg erzeugt wird.

2. Verfahren gemäß Anspruch 1, dadurch gekennzeichnet, daß die Relativgeschwindigkeiten Gas/Suspension 15 – 30 m/sec betragen.

**Claims**

1. A process for the reaction of gases with suspensions in wet flue gas de-sulfurization plants (Naß-REAs), characterized in that the gases are introduced into the suspension in zones of relative velocities of gas/suspension of at least 15 m/s in the form of compressed gas bubbles and that in said zones a local pressure increase is generated.

2. The process according to claim 1, characterized in that the relative velocities of gas/suspension are from 15 to 30 m/s.

**Revendications**

1. Procédé de transformation de gaz à l'aide de suspensions dans des installations de désulfuration humide de gaz de fumées (IDG humide), caractérisé en ce que les gaz sont introduits sous forme de petites bulles comprimées dans la suspension dans des plages de vitesses relatives gaz/suspension d'eu moins 15 mètres seconde, et en ce qu'un accroissement local de pression est créé dans les zones.

2. Dispositif selon 18 revendication 1, caractérisé en ce que les vitesses relatives gaz/suspension sont de 15 à 30 m/sec.